# EUROPÄISCHE PATENTSCHRIFT

(11) **EP 1 534 541 B1**
(45) Veröffentlichungstag und Bekanntmachung des Hinweises auf die Patenterteilung: **23.12.2009**
(21) Anmeldenummer: 03750419.8
(22) Anmeldetag: 20.08.2003
(51) Int. Cl.: B60B 33/02

(54) **LENKROLLE**
STEERING ROLLER
ROUE A PIVOT

(30) Priorität: 04.09.2002 DE 10240676; 08.08.2003 DE 10336636
(43) Veröffentlichungstag der Anmeldung: 01.06.2005
(73) Patentinhaber: Tente GmbH & Co. KG, 42929 Wermelskirchen (DE)
(72) Erfinder: HARTKOPF, Horst, 42929 Wermelskirchen (DE); GOOS, Ralf, 42929 Wermelskirchen (DE); SCHRÖDER, Bernd, 42929 Wermelskirchen (DE)
(74) Vertreter: Müller, Enno
(86) Internationale Anmeldenummer: PCT/EP2003/009225
(87) Internationale Veröffentlichungsnummer: WO 2004/028835

(56) Entgegenhaltungen:
- DE-A- 2 937 540
- DE-A- 3 909 629
- DE-A- 19 516 586
- DE-U- 1 842 465
- DE-U- 7 016 058

## Beschreibung

Die Erfindung betrifft eine Lenkrolle nach den Merkmalen des Oberbegriffes des Anspruches 1.

Zum Stand der Technik ist zunächst die DE-PS 39 09 629 zu nennen. Das die Gehäusehälften einfassende Umfassungselement ist dort als metallener Rohrmantel realisiert. Der erstreckt sich über die gesamte Freistandshöhe des Führungsgehäuses. Fußseitig steht der Rohrmantel mit der Montageplatte bspw. durch Verschweißung in Verbindung. Kopfseitig sind dem Rohrmantel Zungen freigeschnitten. Letztere überfassen die Peripherie der Decke des Führungsgehäuses; sie sind entsprechend umbördelbar. Auf Höhe des Schaltnockens ist das Umfassungselement, sprich Rohrmantel, gelocht zum Durchtritt der Welle des Schaltnockens.

Eine markterhältliche Lenkrolle dieser Art sieht als Umfassungselement eine metallene U-Spange vor. Letztere greift über den Kopf und ragt mit ihren U-Schenkeln praktisch rastgehaltert in eine unrunde Öffnung der Montageplatte. Die Gehäusehälften weisen einen entsprechend axial orientierten Aufnahmegraben für die U-Schenkel auf. Letztere sind durchbrochen zum Durchtritt auch hier einer den Schaltnocken betätigenden Welle der Feststellvorrichtung. Der hier vorliegende Spreizformschluss kann die leichtgängige Führung des Stößels der Feststelleinrichtung beeinträchtigen.

Weiter ist zum Stand der Technik auf die DE 70 16 058 U zu verweisen. Hieraus ist eine Lenkrolle mit einer Feststellvorrichtung in einem Führungsgehäuse bekannt, wobei das Führungsgehäuse aus zwei entlang einer Vertikalen zusammenwirkenden Gehäusehälften besteht. Darüber hinaus ist auf die DE 195 16 586 A zu verweisen. Hieraus ist eine Lenkrolle mit Feststellvorrichtung bekannt, wobei die Feststellvorrichtung aus einem Stößel mit Bremsfuß besteht, der bei seiner Absenkung eine Feder mit Zähnen betätigt, die in eine Verzahnung zur Drehsicherung eingreift.

Ausgehend von dem genannten Stand der Technik stellt sich der Erfindung die Aufgabe, eine günstige Fixierung der Gehäusehälften zueinander anzugeben.

Diese Aufgabe ist zunächst beim Gegenstand des Anspruches 1 gelöst, wobei darauf abgestellt ist, dass die Gehäusehälften durch fugenübergreifende Vorsprünge verschiebefest sind und dass die Gehäusehälften formidentisch ausgebildet sind.

Somit ist zunächst ein frei zuordbares, reifartiges Umfassungselement erzielt. Über dieses lassen sich die Gehäusehälften perfekt zusammenhalten. Die Montage beschränkt sich auf das Aufstreifen. Wird der Ringkörper oberhalb der Montageplatte zugeordnet, kann er durch die das Führungsgehäuse querende Welle, die den Schaltnocken der Feststellvorrichtung betätigt, sogar gesichert werden. Auch bedarf es nicht der Lochung für die Welle.

Weiter ist gemäß Anspruch 2 darauf abgestellt, dass die Verzahnung oberseitig des Ringbundes ausgeformt ist, dass das Drehrichtungs-Feststellteil eine Feder ist und dass die die Feder in radialer Richtung, bezogen auf den Stößel, zwischen dem Stößel und dem Blockierabschnitt einen Brems-Eingriffsabschnitt aufweist zur Brems-Zusammenwirkung mit dem Laufrad. Ein besonderer Betätigungshebel ist so verzichtbar. Der Stößel greift als Geber unmittelbar an der Feder an.

Es erweist sich als vorteilhaft, dass der Ringkörper integral ausgebildet ist. Diese in ihrer Funktion für sich ein Ganzes ausmachende Bauform ist aber auch noch weiter gestaltbar, was sich mit Vorteil darin verkörpert, dass der Ringkörper, jedenfalls in aufgestecktem Zustand, eine sich in Umfangsrichtung erstreckende, axial ausgeprägte Aufweitung aufweist. Letztere ist glockenrandartig und erleichtert die Steckmontage. So ist eine hobelnde Wirkung vermieden. Während die Aufweitung am oberhalb der Montageplatte zugeordneten Ringkörper bereits formtechnisch vorhanden ist, ergibt sie sich bei Zuordnung eines Ringkörpers unterhalb der Montageplatte im Zuge der Zuordnung, und zwar als sich fliehend abstemmender Lochrand. Konsequent ist der Ringkörper, jedenfalls bei Anordnung unterhalb der Montageplatte, daher als Klemmfeder ausgebildet. Der Lochrand des Ringkörpers weist die üblichen Federkrallen auf. Über den zweiten Ringkörper wird neben einer zweiten reifartigen Umfassung zugleich eine axiale Fesselung des Führungsgehäuses an der Montageplatte erreicht.

Die durch fugenübergreifende Vorsprünge verschiebefesten Gehäusehälften und eine formidentische Ausbildung der Gehäusehälften sichert gleiche Beanspruchungsbedingungen und mindert überdies den Werkzeugaufwand. Die Gehäusehälften können in einem Spritzgießwerkzeug erzeugt werden und bestehen bevorzugt aus Kunststoff. Ein Mittel der radialen Scherung des Führungsgehäuses besteht weiterbildend darin, dass an einer Gehäusehälfte ein Flanschabschnitt ausgeformt ist, der oberseitig der Montageplatte mit Vertikalvorsprüngen der Montageplatte formschlüssig zur Drehsicherung zusammenwirkt. Selbstredend lassen sich beide Gehäusehälften entsprechend ausstatten.

Weiter ist vorgesehen, dass eine Gehäusehälfte umfangsseitig Sicherungsausformungen zur Zusammenwirkung mit einem Ringkörper aufweist. Solche Siecherungsausformungen bestehen aus einem Kranz axial orientierter Rippen. Eine entsprechende Rauung vergrößert den Spannhalt des Ringkörpers am Führungsgehäuse. Ungünstige Toleranzpaarungen werden so bestens kompensiert. Vorteilhaft ist es, dass die Rippen flachsekantenförmiger Querschnittskontur mit stirnseitiger Abdachung sind sowie einem Fußbund entspringen. Das vermeidet im Verein mit der oben erwähnten Aufweitung hobelnden Abtrag und hat überdies den Vorteil, dass der die Höhe der Rippen überragende Fußbund einen Steckbegrenzungsanschlag für den oberhalb der Montageplatte plazierten Ringkörper bildet.

Weiter weist die Feststellvorrichtung einen durch den Schaltnocken betätigbaren Stößel auf. Der stellt das Schaltübertragungsmittel der Feststellvorrichtung der Lenkrolle und ist im Hinblick auf die Funktionen Bremsen und Lenkblokkieren hin ausgestattet. Dazu gehört, dass der Stößel in dem Führungsgehäuse drehgesichert aufgenommen ist. Das verkörpert sich gemäß einer Lösungsform mit einfachen Mitteln darin, dass die Drehsicherung in einem Fortsatz des Führungsgehäuses ausgeformt ist durch eine der Innenfläche des Fortsatzes angeformte Mehrkantigkeit mit einer zugeordneten Kantigkeit des Stößels. Eine andere, mehr Sperrfläche zur Verfügung stellende Ausprägung ergibt sich dadurch, dass die Drehsicherung in einem Gehäuseinneren des Führungsgehäuses ausgeformt ist durch eine der Innenfläche des Gehäuseinneren angeformte Mehrkantigkeit mit einer zugeordneten Kantigkeit des Stößelkopfes. Bei beiden Ausprägungen ist bezüglich der unrunden Struktur auf die gängige hexagonale Geometrie gesetzt. Das freie Ende des Stößels ist mit einem Bremskörper bestückt. Gemäß einem vorteilhaften Merkmal der Erfindung weist die Feststellvorrichtung einen scheibenförmigen Bremskörper auf, der selbst drehgesichert am Stößel angeordnet ist. Bevorzugt ist der Bremskörper als axial federbare Scheibe ausgebildet. Das macht ihn elastisch. Bei härterer Lauffläche des Laufrades gibt die Scheibe nach; der Betätigungshub des Stößels wird hingegeben in konstanter Weglänge ausgeübt. In einfacher Weise wird einerseits die Federbarkeit des Bremskörpers durch konzentrisch zur Achse des Stößels ausgebildete Reihen von Langlöchern erzielt, belassend jeweils radiale Materialbrücken etwa in der Mitte eines konzentrisch benachbarten Langloches. Andererseits ist die Federbarkeit des Bremskörpers aber auch durch radial gleichsinnig gekrümmte, einander auf einer Teillänge überlappende Langlöcher erreichbar. Das ergibt einen Federkörper in schaufelradartiger Durchbrechungsstruktur. Weiter ist ein vorteilhafter Aufbau durch eine laufradseitig vorkragende Randrinne des scheibenförmigen Bremskörpers erzielt. Letztere ergibt eine exponierte Querverrundung der Peripherie des Bremskörpers. Der Kammbereich desselben kontaktiert die Lauffläche und drückt diese beim Brems- sowie Lenkblockierungsvorgang ein. Daher ist es vorteilhaft, wenn die Randrinne geraut ist. Konsequent weist der Rinnengrund jedenfalls außenseitig Radialrippen bildende Radialnuten auf. Die sind gleichwinklig verteilt. Die Radialnuten werden zweckmäßig durch Kerbung erzeugt. Andererseits besteht aber auch die Möglichkeit, dass die Radialrippen und Radialnuten durch eine Umfangswellung der Randrinne gebildet sind. Die auch hier vorliegende gleichmäßige Zahnstruktur begünstigt die weitere Maßnahme, dass die Radialrippen mit einer Radgabel-Drehsperre in Eingriff bringbar sind. Letztere erstreckt sich im Hubbereich des Stößels und liegt praktisch höhengleich zum laufradseitigen Bremspunkt.

So ist weiter vorgesehen, dass das Drehrichtungs-Feststellteil eine Feder ist. Letztere kann Vorspannung aufweisen. Sie kann sogar eine dem Stößel gegebene Rückholfeder im Sinne der Grundstellung unterstützen. Weiter wird vorgeschlagen, dass ein mit der Verzahnung zusammenwirkender Blockierabschnitt aus der Feder ausgebogen ist. Ein so ebenfalls federfähiger Blockierabschnitt erlaubt auch die Institution der Vorrast, wenn es also nicht gleich zu einer deckungsgleichen Ausrichtung von Zahn und Lücke kommt. Auch die Fixierung der Feder ist baulich einfach erreichbar, wenn so vorgegangen wird, dass die Feder über den Blockierabschnitt hinaus sich, bezogen auf den Stößel, radial in einen Außen-Befestigungsabschnitt einer Formschlusshalterung fortsetzt. Die Feder ist so brückenartig beiderends fixiert, einerseits am Stößel und andererseits am ortsfesten Ringbund. Ein baulich vorteilhaftes Merkmal besteht sodann darin, dass der Außen-Befestigungsabschnitt mindestens eine Befestigungszunge aufweist, die jedenfalls ergänzend zur Formschlusshalterung eine Formschlussausformung aufweist. Es genügt eine Ausklinkung oder Nische. Das verkörpert sich im Einzelnen darin, dass die Formschlussausformung mit einem Durchsetzniet, der am Gabelgrund befestigt oder gleich Teil der Radgabel ist, zusammenwirkt. Zweckmäßig sind zwei parallel verlaufende Befestigungszungen ausgebildet. Dabei liegen die Formschlussausformungen an den einander zugewandten Randkanten der Befestigungszungen. Um mit ein und demselben Drehrichtungs-Feststellteil auch die Funktion der Bremsblockierung des Laufrades zu erlangen, ist eine Ausgestaltung dahingehend vorgenommen, dass die Feder in radialer Richtung, bezogen auf den Stößel, zwischen dem Stößel und dem Blockierabschnitt einen Brems-Eingriffsabschnitt aufweist zur Brems-Zusammenwirkung mit dem Laufrad. Auch der Brems-Eingriffsabschnitt ist aus der Feder ausgebogen. Dabei sind unter Berücksichtigung der genannten Funktionsstellen der Blockierabschnitt und der Brems-Eingriffsabschnitt zwei verschiedenen, vertikal beabstandeten Ebenen zugeordnet. Dazu nimmt die Feder in Längsquerschnitt einen Z-förmigen Verlauf ein. Dies so, dass der Blockierabschnitt dem Laufrad abgewandt und der Brems-Eingriffsabschnitt demselben zugewandt ausgebogen ist. Sowohl der Blockierabschnitt als auch der Brems-Eingriffsabschnitt wurzeln freigeschnitten in Fenstern der Feder. So kann die Federwirkung sich auch in diesen Funktionsabschnitten gut entfalten. Hinsichtlich des Brems-Eingriffsabschnitts wird eine dem sonstigen Gummiblöckchen entsprechende Elastizität erreicht. Selbstredend kann besagter Brems-Eingriffsabschnitt jedoch auch mit einem solchen Gummiblöckchen besetzt sein.

Der Gegenstand der Erfindung ist nachstehend anhand eines zeichnerisch veranschaulichten Ausführungsbeispieles näher erläutert. Es zeigt:
- Fig. 1: eine partiell aufgebrochene Seitenansicht der Lenkrolle,
- Fig. 2: die Draufsicht hierzu,

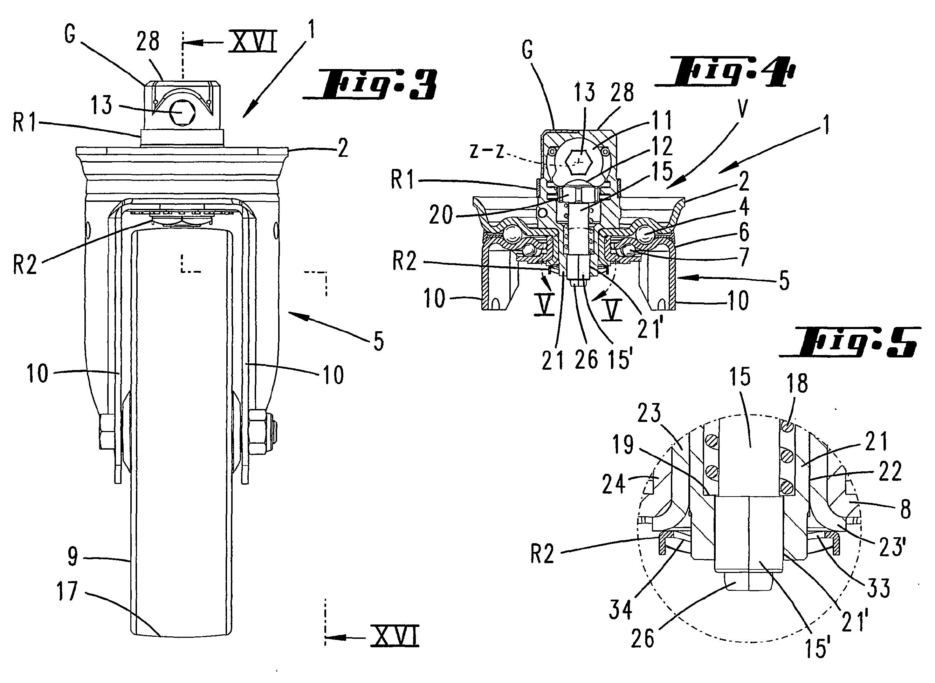

- Fig. 3: die Lenkrolle in Stirnansicht,

- Fig. 4: den Schnitt gemäß Linie IV-IV in Fig. 1, bei noch nicht angebrachtem Bremskörper,
- Fig. 5: eine Herausvergrößerung V aus Fig. 4,
- Fig. 6: eine erste Gehäusehälfte in Stirnansicht,
- Fig. 7: eine zweite Gehäusehälfte in Stirnansicht,
- Fig. 8: eine Innenansicht der ersten Gehäusehälfte,
- Fig. 9: eine Innenansicht der zweiten Gehäusehälfte,
- Fig. 10: die Draufsicht auf das zusammengefügte Führungsgehäuse, bestehend aus zwei formidentischen Gehäusehälften,
- Fig. 11: die Unteransicht des Führungsgehäuses,
- Fig. 12: den Schnitt gemäß Linie XII-XII in Fig. 10,
- Fig. 13: den Schnitt gemäß Linie XIII-XIII in Fig. 10,
- Fig. 14: den Schnitt gemäß Linie XIV-XIV in Fig. 1,

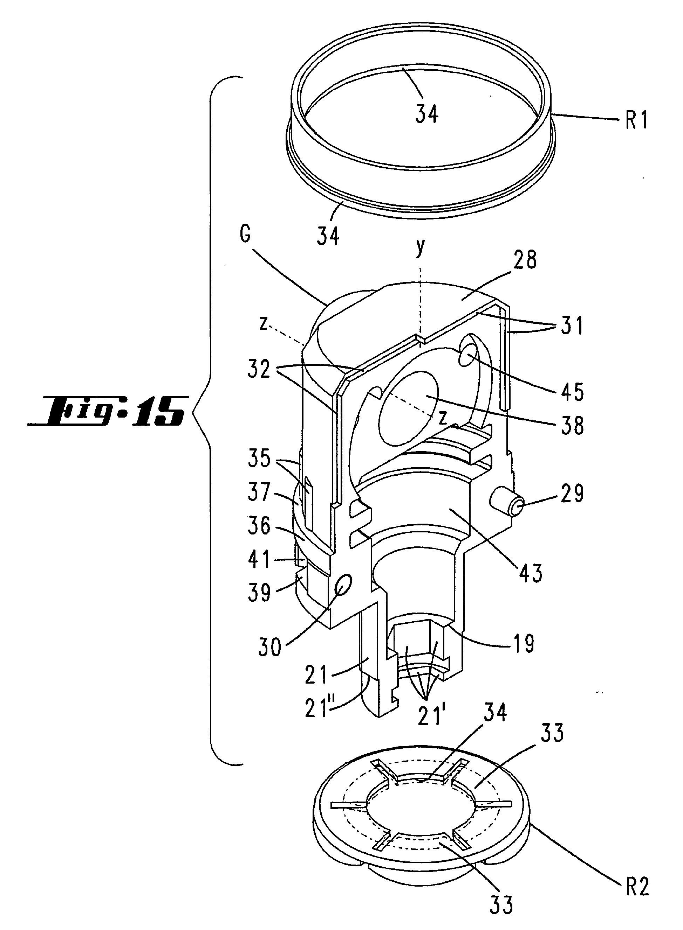

- Fig. 15: eine Gehäusehälfte in perspektivischer Wiedergabe mit steckgerecht ausgerichteten Ringkörpern,
- Fig. 16: den im Vertikalschnitt wiedergegebenen Kopfbereich der Lenkrolle gemäß Fig. 1 in vergrößerter Wiedergabe,

- Fig. 17: Fig. 4 in vergrößerter Wiedergabe, bezüglich des Bremskörpers nunmehr komplettiert,
- Fig. 18: den Stößel der Feststellvorrichtung in isolierter Wiedergabe bei endseitig abgetragener Kantigkeit und Mitausbildung der Drehsicherung am Stößelkopf, und zwar in Froschperspektive,
- Fig. 19: einen der Fig. 16 entsprechenden Vertikalschnitt, wiedergebend weiterbildende Elemente bezüglich des Bremskörpers,
- Fig. 20: eine Herausvergrößerung XX aus Fig. 19, bei abgewandeltem Bremskörper,
- Fig. 21: eine baulich abgewandelte Gehäusehälfte in perspektivischer Wiedergabe,
- Fig. 22: einen Bremskörper in Unteransicht,
- Fig. 23: einen abgewandelten Bremskörper in Unteransicht,
- Fig. 24: den im Vertikalschnitt wiedergegebenen Kopfbereich der Lenkrolle, wiedergebend weiterbildende Elemente bezüglich der Radgabel-Dreh- bzw. Lenksperre,
- Fig. 25: die Unteransicht hierzu bei weggelassenem Laufrad,
- Fig. 26: die das Drehrichtungs-Feststellteil bildende Feder in Draufsicht, vergrößert,

- Fig. 27: den Schnitt gemäß Linie XXVII-XXVII in Figur 26,
- Fig. 28: die Feder in perspektivischer Darstellung,
- Fig. 29: Einzelheiten einer Formschlusshalterung des DrehrichtungsFeststellteils.

Die dargestellte, in Ganzheit mit 1 bezeichnete Lenkrolle ist zur Ausstattung eines nicht dargestellten Müllcontainers vorgesehen, gegebenenfalls auch unter Mitverwendung sogenannter Bockrollen.

Zur Anbringung der Lenkrolle 1 am Fuß des Containers dient eine Montageplatte 2. Letztere ist getellert. Ihr Tellerrand weist als tragender, ebener Flansch Befestigungslöcher 3 auf.

Unter Zwischenschaltung eines oberen Kugellagers 4 befindet sich an der Montageplatte 2 eine drehgelagerte Radgabel 5. Deren Gabelgrund 6 ruht unter Zwischenschaltung eines unteren Kugellagers 7 auf einem ortsfesten Ringbund 8. Die Teile 2, 6 und 8 sind bezüglich der Kugeln ringrillenbildend gestaltet.

Die Radgabel 5 nimmt in ihrem Gabelraum ein Laufrad 9 auf. Das ist mit den Gabelschenkeln 10 horizontal verachst. Erkennbar ist die horizontale Achse x-x der Lenkrolle 1 so weit aus einer vertikalen Achse y-y der Radgabel 5 verlegt, dass die lenkrollentypische Schwenkbarkeit um die besagte Achse y-y gegeben ist. Bei einer Bockrolle steht die Radgabel fest.

Bei der hier dargestellten Lenkrolle 1 lässt sich eine Drehblockierung der Radgabel 5 sowie das Bremsblockieren des Laufrades 9 willensbetont herbeiführen. Hierzu dient eine Feststellvorrichtung V. Die ist im Kopfbereich der Radgabel 5 angeordnet. Sie umfasst obenliegend einen Schaltnocken 11. Dessen der Radgabel 5 zugewandte Peripherie formt eine Steuerkurve 12. Der Schaltno k-ken 11 lässt sich um eine horizontale Achse z-z drehen.

Zur Drehmitnahme ist im Schaltnocken 11 eine unrunde, genauer hexagonale Durchbrechung 13 vorgesehen. In die greift eine konturangepasste Welle 14 drehmitnehmend ein. Besagte Welle 14 weist einen nicht dargestellten Schalthebel auf, der Teil einer Verriegelungsvorrichtung des Müllcontainers ist. Die Verriegelungsvorrichtung selbst ist über ein Schloss sicherbar.

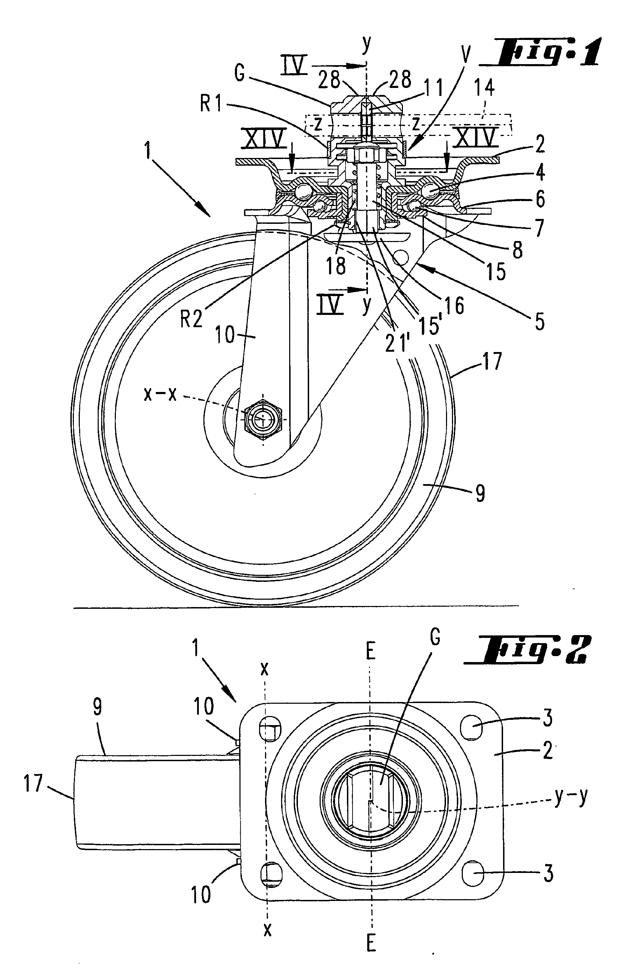

Der Schaltnocken 11 verlagert vertikal einen in Richtung einer Grundstellung federbelasteten Stößel 15 der Feststellvorrichtung V. Dessen kugelabschnittsförmig gestalteter Kopfvorsprung tastet die ihn überlaufende Steuerkurve 12 ab. Letztere berücksichtigt eine Freigabestellung, wie sie aus Fig. 1 ersichtlich ist. In dieser Freigabestellung steht ein am unteren Ende des Stößels 15 gehalterter Bremskörper 16 von der Lauffläche 17 des Laufrades 9 frei ab.

Die den Stößel 15 in Richtung der dargestellten Grundstellung belastende Feder 18 ist eine Schraubengang-Druckfeder. Deren untere endständige Federwindung stützt sich auf einer Schulter 19 eines die Feststellvorrichtung V aufnehmenden Führungsgehäuses G ab. Die obere endständige Windung der besagten Feder 18 tritt gegen bzw. belastet die Unterseite eines Stößelkopfes 20. Der ist, einem Schraubenkopf vergleichbar, sechskantigen Umrisses. Der Spitzendurchmesser liegt bei dem Maß des doppelten Durchmessers des im Mittelbereich zylindrischen Stößels 15.

Das untere Ende des Stößels 15 ist unrund, bevorzugt hexagonal. Die unter der Schulter 19 liegende Restlänge der zentralen Durchbrechung des Führungsgehäuses G ist angepassten Querschnitts, fungiert so als Drehsicherung zwischen dem Führungsgehäuse G und dem Stößel 15.

Das Führungsgehäuse G selbst ist in Bezug auf die Montageplatte 2 drehgesichert. Dazu ist der untere, querschnittskleinere Bereich des Führungsgehäuses G mantelwandseitig sechskantig gestaltet. Dieser mehrkantige Fortsatz ist mit 21 bezeichnet. Er steckt in einer zentral gelegenen, passend-sechskantigen Durchbrechung 22 der Montageplatte 2.

Die Drehsicherung zwischen dem Führungsgehäuse G und dem Stößel 15 ist zuordnungsmäßig derart, dass sie in der Höhenebene des laufradnahen Fortsatzes 21 des Führungsgehäuses G installiert ist. Realisiert ist sie durch eine der Innenfläche des Fortsatzes 21 angeformte Mehrkantigkeit 21', die mit einer passenden Kantigkeit 15' am unteren Ende des Stößels 15 zusammenwirkt. Diese, wie schon angedeutet, in ihrer Geometrie hexagonale Drehsicherung erstreckt sich im Bereich einer Zone, die durch die Wandung der passend-sechskantigen Durchbrechung 22 umringt ist.

Unter Nutzung der hexagonalen Querschnittsgestalt des Stößelkopfes 20 lässt sich die Drehsicherung zwischen dem Führungsgehäuse G und dem von diesem aufgenommenen Stößel 15 auch oder zusätzlich oben ausbilden. Auf diese Details wird weiter unten hingewiesen.

Die Durchbrechung 22 befindet sich an einem in Richtung des Laufrades 9 weisenden Stutzen 23. Letzterer geht als tiefgezogener Abschnitt vom Tellerboden der Montageplatte 2 aus und ist endseitig nach auswärts gehend verkröpft. Der entsprechende Kröpfrand 23' unterfasst den Ringbund 8, genauer einen den Stutzen 23 außenseitig umfassenden Kragen 24 des besagten Ringbundes 8.

Der obere Stirnrand des Kragens 24 reicht bis zur Unterseite des Tellerbodens der Montageplatte 2. Er fungiert so als Distanzhülse.

Im Übrigen umgreift der Kragen 24 der unrunden Struktur des Stutzens 23 folgend, diesen. Auf diese Weise gehört der Ringbund 8 auch zum Festteil der Lenkrolle. Im dargestellten Lagenpaket bewegt sich, wie oben schon angedeutet, lediglich der Gabelgrund 6 im Sinne der Verschwenkung der Radgabel 5.

Der Bremskörper 16 ist scheiben- bzw. ringscheibenförmiger Gestalt. Er weist ein unrundes zentrales Auge 25 auf, dies konturpassend zu einem abgesetzten mehrkantigen, einsteckenden Steckvorsprung 26 am unteren Ende des Stößels 15. Auch diese Drehsicherung ist über eine Sechskantigkeit erzielt.

Zur Fesselung des drehfesten Bremskörpers 16 am Stößel 15 dient eine Schraube 27, die in ein zentrales Innengewinde des Stößels 15 eingreift.

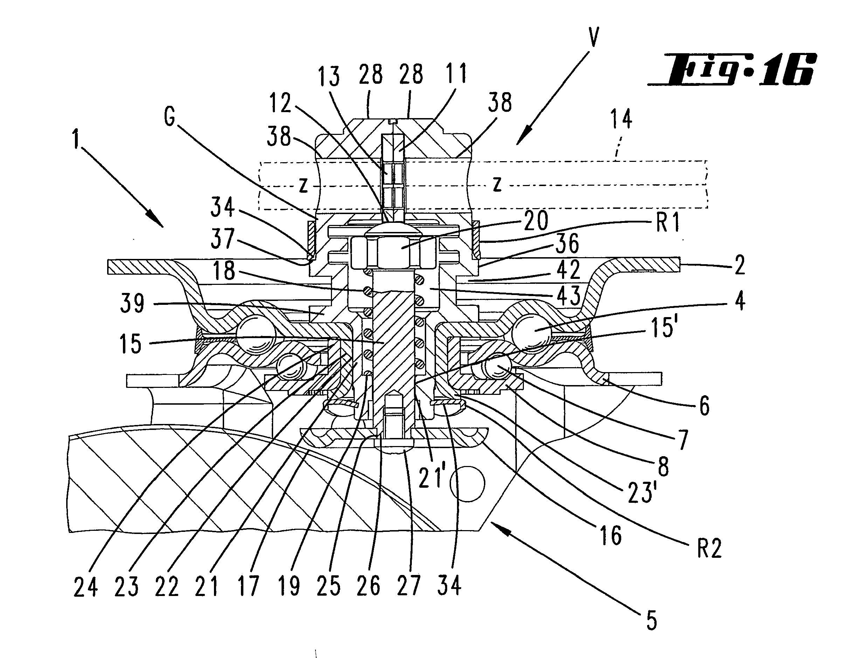

Im Bereich des oberen Mundes der Durchbrechung 22 geht das Führungsgehäuse G in die Breite. Es findet auf dem Tellerboden so eine relativ breitflächige Abstützung (es sei auf Fig. 16 verwiesen). Das Führungsgehäuse G besteht aus zwei schalenartigen Gehäusehälften 28. Die treffen bezüglich ihrer Schalenränder auf einer Vertikalen zusammen. Die Vertikale schneidet die Achse y-y und ist in der Zeichnung als Fugenebene mit E-E bezeichnet (vergl. Fig. 2). Die Fugenebene E-E erstreckt sich raumparallel zu einer die horizontale Achse x-x des Laufrades 1 schneidenden Vertikalebene.

Das aus zwei entlang der Vertikalen definiert abgestützt zusammenwirkenden Gehäusehälften 28 bestehende Führungsgehäuse G ist durch ein Umfassungselement zusammengehalten. Das geschieht gemäß dargestelltem Ausführungsbeispiel auf zwei horizontalen Ebenen, und zwar auf einer Ebene, die dem Müllcontainer näher liegt und einer, die dem Laufrad 9 näher liegt.

Beide Umfassungselemente wirken gehäuseschließend, ein Umfassungskörper dabei zusätzlich gehäusefesselnd.

Dabei ist das Umfassungselement, je nach Ausprägung, als ober- und/ oder unterhalb der Montageplatte 2 horizontal angeordneter, geschlossener Ringkörper realisiert.

Der oberhalb der Montageplatte 2 angeordnete, rohrabschnittartige Ringkörper ist mit R1 bezeichnet, der unterhalb der Montageplatte 2 aufgesetzte Ringkörper mit R2. Der obere, bevorzugt metallene Ringkörper R1 umfasst den durchmessergrößeren Part des Führungsgehäuses G, der untere den querschnittskleineren Part, deklariert als mehrkantiger Fortsatz 21. Die Mehrkantigkeit ist überwiegend.

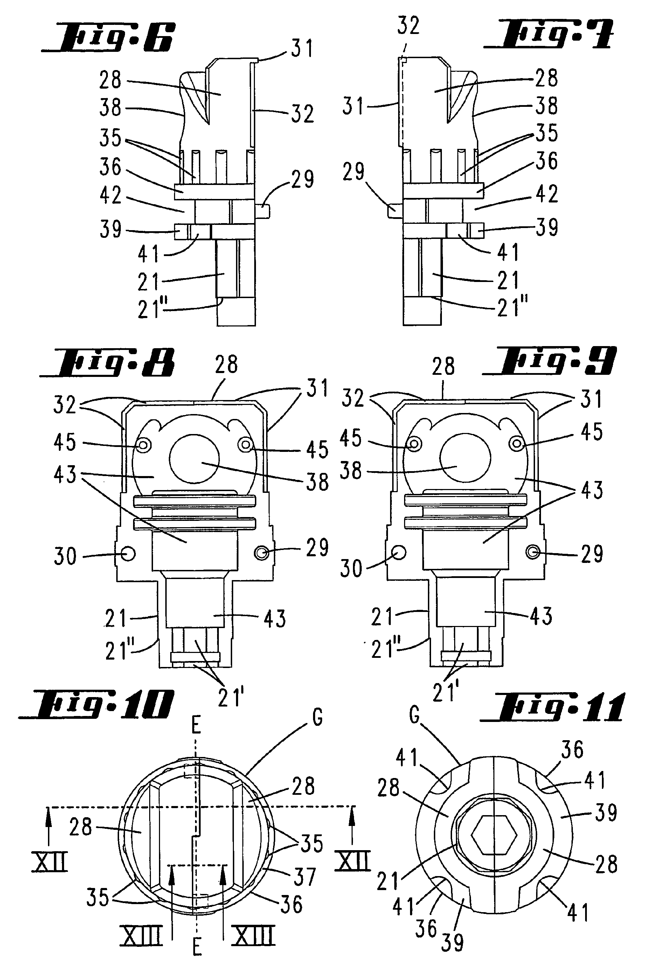

Die Gehäusehälften 28 sind so, axial beabstandet, wie ein Fass durch Reife sicher zusammengehalten. Auch Verschiebungen der Gehäusehälften 28 im Bereich ihrer Fugenebene E-E sind ausgeschlossen durch fugenübergreifende Vorsprünge 29, die passstiftartig in kongruente Vertiefungen 30 der jeweils anderen Gehäusehälfte ragen. Die Vorsprünge 29 können, wie dargestellt, kegelstumpfförmiger Gestalt sein. Diese zugleich zentrierend wirkenden Stehzapfen befinden sich im Fußbereich des querschnittsgrößeren Parts des Führungsgehäuses G. Im Kopfbereich, also auch noch im durchmessergrößeren Bereich, in der Zone, in der der Schaltnocken 11 unterkommt, sind zusätzlich Vorsprünge 31 und Vertiefungen 32 realisiert; diese sind aber als Randleisten bzw. Randvertiefungen ausgebildet. Letztere gehen über Eck, laufen also auch noch in die Decke des Führungsgehäuses G ein (es sei bspw. auf Fig. 9 verwiesen).

Der Wechsel von der Patrizenstruktur in die Matrizenstruktur findet in der vertikalen Achse y-y statt.

Der mit R2 bezeichnete Ringkörper übernimmt außer der Reiffunktion, wie schon angedeutet, auch die Halterung des Führungsgehäuses G an der Lenkrolle 1, genauer der Montageplatte 2. Dieser Ringkörper R2 ist als stählerne Klemmfeder realisiert. Es ist eine Ringfeder mit freigeschnittenen, einwärts gerichteten Krallen 33. Die stellen sich klemmgesperreartig aus, und zwar entgegen der Aufsteckrichtung, welche von unten nach oben verläuft. Die auf einer Durchmesserdifferenz beruhende Klemm-Gesperrewirkung - das Loch in de Ringfeder ist etwas kleiner als der Durchmesser des Fortsatzes 21 beträgt - ist bezüglich der Intensität in Fig. 16 etwas übertrieben dargestellt, obwohl es zu durchaus in die Tiefe gehenden, abdruckbildenden Kerbstellen kommt. Die Klemmfeder findet ihren Zuordnungs-Endanschlag an dem nach auswärts gebördelten Ende des Stutzens 23, dem Kröpfrand 23' also. Nach oben gerichtete Belastungen am Führungsgehäuse G können nur zu einem Lösen führen, wenn die Krallen 33 über eine Totpunktlinie geführt werden, deren Wurzelpunkte die Anbindungsstellen der Krallen 33 im Ring sind. Da diese aber eine Schrägung von ca. 30° entnehmen, ist eine Gefahr des Lösens praktisch nur theoretischer Natur.

Der Fortsatz 21 ist durchmesserverschieden. Er ist im unteren Drittel seiner Länge mantelwandseitig abgesetzt. Das ergibt eine umlaufende Stufe 21". Hieran können die zungenförmigen Krallen 33 in die axial orientierte Aufweitung 34 gezwungen werden, wenn die Stufe 21" genügend frei nach unten aus dem Stutzen 23 vorragt (beim Beispiel ist das nicht der Fall).

Verstärkt ist eine solche Klemmfeder durch die schürzenartigen Abwinklungen des Außenrandes. Das ist auch in stabilisatorischer Hinsicht für die Aufsteckzuordnung günstig.

Die Ringkörper R1, R2 sind integral ausgebildet; sie wirken als für sich bestehendes Ganzes.

Während die Schräglage der Krallen 33 sich als axial ausgeprägte Aufweitung 34 erst bei Zuordnung des Ringkörpers R2 ergibt, liegt sie bezüglich des Ringkörpers R1 schon bei nicht aufgestecktem Zustand desselben vor. Sie fungiert hier im Sinne der Erlangung einer erleichterten, selbstzentrierenden Aufsteckzuordnung. Sie ist erkennbar als einen leichten Glockenrand bildende Aufweitung 34 realisiert. Letztere ist in Umfangsrichtung durchgehend und auch hier axial orientiert ausgeprägt.

Das Führungsgehäuse G besitzt eine die Steckstellung des Ringkörpers R1 sichernde Rauung. Die verkörpert sich an der Mantelwand der beiden formidentisch ausgebildeten Gehäusehälften 28. Es handelt sich um Sicherungsausformungen zur klemmungsverstärkenden Zusammenwirkung mit dem Ringkörper R1. Wie der Zeichnung entnehmbar, bilden diese Sicherungsausformungen einen Kranz axial orientierter Rippen 35. Es sei bspw. auf die Fig. 6 und 10 verwiesen. Vor allem aus Fig. 10 geht hervor, dass die Rippen 35 flach-sekantenförmiger Querschnittskontur mit stirnseitiger Abdachung sind. Die sehnenseitig in der Mantelwand der Gehäusehälften 28 wurzelnden Rippen 35 gehen unten von einem Fußbund 36 der Gehäusehälften 28 aus. Dabei ist aber nicht die gesamte horizontale Breite des Fußbundes 36 genutzt. Dadurch ist erreicht, dass der Fußbund 36 randnah noch einen Steckbegrenzungsanschlag 37 für den oberhalb der Montageplatte 2 plazierten Ringkörper R1 belässt.

Der so optimal fixierte Reif kann sich auch nicht nach oben gehend abstreifen, da der dortige Stirnrand des Ringkörpers R1 von der wie ein Sperrriegel wirkenden Welle 14 gequert wird, welche Welle deckungsgleich liegende Horizontalbohrungen 38 der Gehäusehälften 28 durchsetzt.

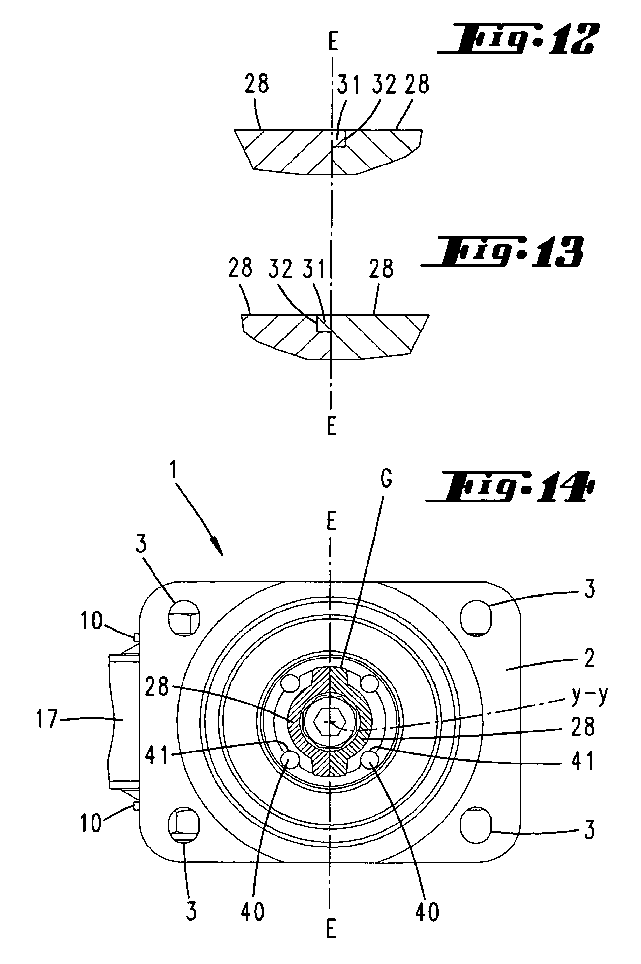

Über die Drehsicherung durch den mehrkantigen Fortsatz 21 und die sechskantige Durchbrechung 22 hinaus befindet sich eine zweite Drehsicherung zwischen Montageplatte 2 und dem ihr zugeordneten Führungsgehäuse G. Hierzu ist ein den Gehäusehälften 28 angeformter Flanschabschnitt 39 genutzt. Er ist gestellt von der verbreiterten Basis des oberen Parts des Führungsgehäuses G. Der besagte Flanschabschnitt 39 liegt satt auf dem Tellerboden der Montageplatte 2 auf und wirkt mit von der Montageplatte 2 ausgehenden Vertikalvorsprüngen 40 zusammen. Es handelt sich gemäß Darstellung Fig. 14 um zylindrische Zapfen. Die können aus dem Material der Montageplatte 2 ausgedrückt werden. Die Vertikalvorsprünge 40 sind winkelgleich verteilt und ragen in passende, radial offene Nischen 41 des besagten Flanschabschnitts 39.

Die hinzugekommene Formschluss-Drehsicherung wirkt zugleich als Montagehilfe.

Die Nischen 41 liegen beabstandet zur Fugenebene E-E. Die zwischen dem Fußbund 36 und dem Flanschabschnitt 39 liegende Ringnut 42 ist im Bereich der Fugenebene E-E unterbrochen, dies im Sinne der Erlangung einer größeren Materialanhäufung zur Unterbringung/ Ausbildung der Vorsprünge 29 und Vertiefungen 30.

Wie im Übrigen aus Fig. 16 erkennbar, sind auch Maßnahmen zur Materialeinsparung getroffen, dies vor allem auf Höhe des Stößelkopfes 20, und zwar in Form von nutartigen Ausräumungen des Gehäuseinneren 43.

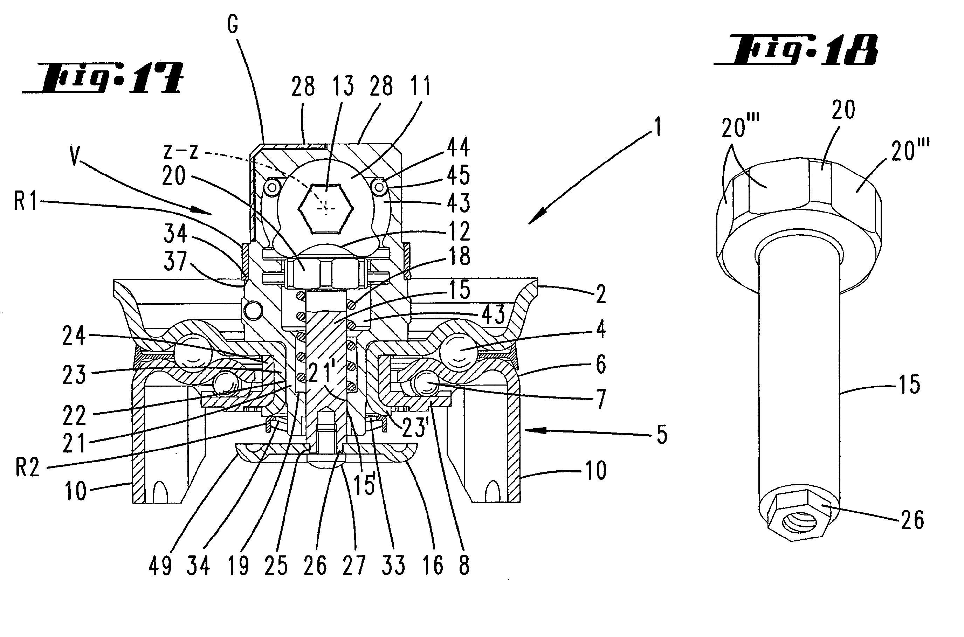

Im Hinblick auf Fig. 17 bleibt noch anzumerken, dass den exponierten Abschnitten der Steuerkurve 12 des Schaltnockens 11 drehbegrenzende Endanschläge 44 zugeordnet sind. Es handelt sich um Metallzapfen, die in Aufnahmen 45 des dortigen Gehäuseinneren 43 untergebracht bzw. gehaltert sind.

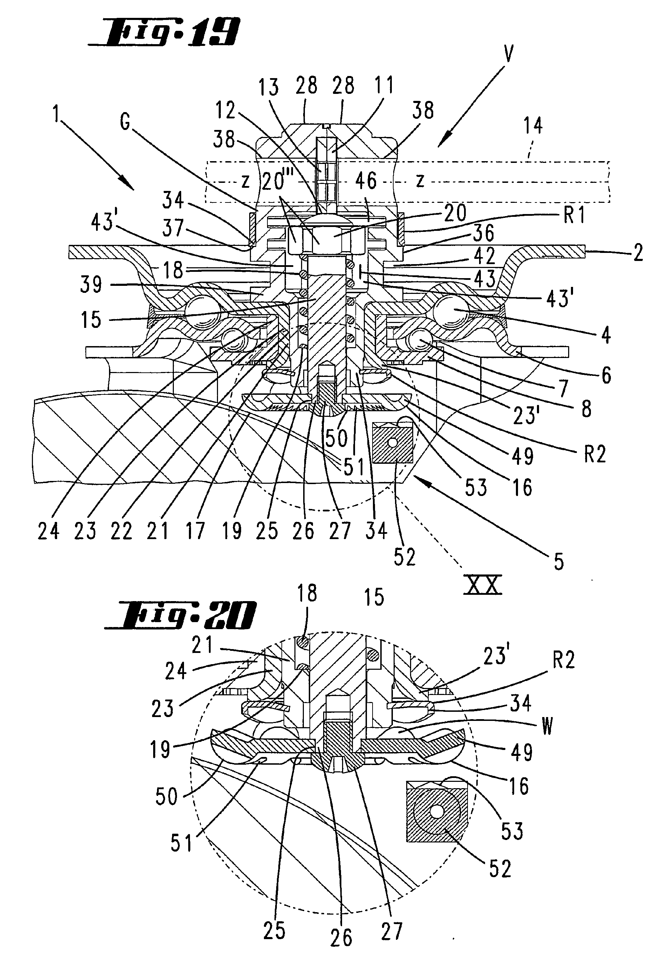

Wie schon angedeutet, lässt sich der Stößelkopf 20 aufgrund seiner geometrischen Gegebenheit, nämlich Sechskant, ebenfalls zur Bildung einer Drehsicherung heranziehen. Die liegt höhenmäßig im Bereich der Montageplatte 2 und bietet größere Sperrflächen. Die im Führungsgehäuse G im Bereich seiner größeren lichten Breite liegende Aufweitung besitzt die passende Gegenkontur. Merkmalsmäßig schlägt sich das dergestalt nieder, dass die Drehsicherung im Gehäuseinneren 43 des Führungsgehäuses G ausgeformt ist durch eine der Innenfläche des Gehäuseinneren 43 angeformte Mehrkantigkeit 43'. Die Mehrkantigkeit 43' ist auf die Kantigkeit 20"' des Stößelkopfes 20 abgestimmt. Wie der Zeichnung, bspw. Fig. 19, entnehmbar, kann die Mehrkantigkeit 43' durch Horizontalnuten 46, zum Gehäuseinneren 43 hin öffnend, unterbrochen sein. Die axiale Breite der Horizontalnuten 46 ist geringer als die in dieser Richtung gemessene Dicke des Stößelkopfes 20. So bleibt die durchgehende Abstützung/ Führung auch bei Verlagerung des Stößels 15 erhalten.

Das untere Ende des Stößels 15 kann die einleitend geschilderte Drehsicherung beibehalten. Ist die dortige Drehsicherung nicht vorgesehen, wird der mehrkantige Fortsatz 21 im Bereich seiner Innenflächen einfach auf das Spitzenmaß der Mehrkantigkeit 21'ausgerundet. Der Stößel 15 kann in diesem unteren Bereich aber auch zylindrisch weitergeführt sein, wie sich das aus Fig. 18 ergibt. Die lagernde Aufnahme des Führungsgehäuses G ist dem Querschnitt angepasst rund.

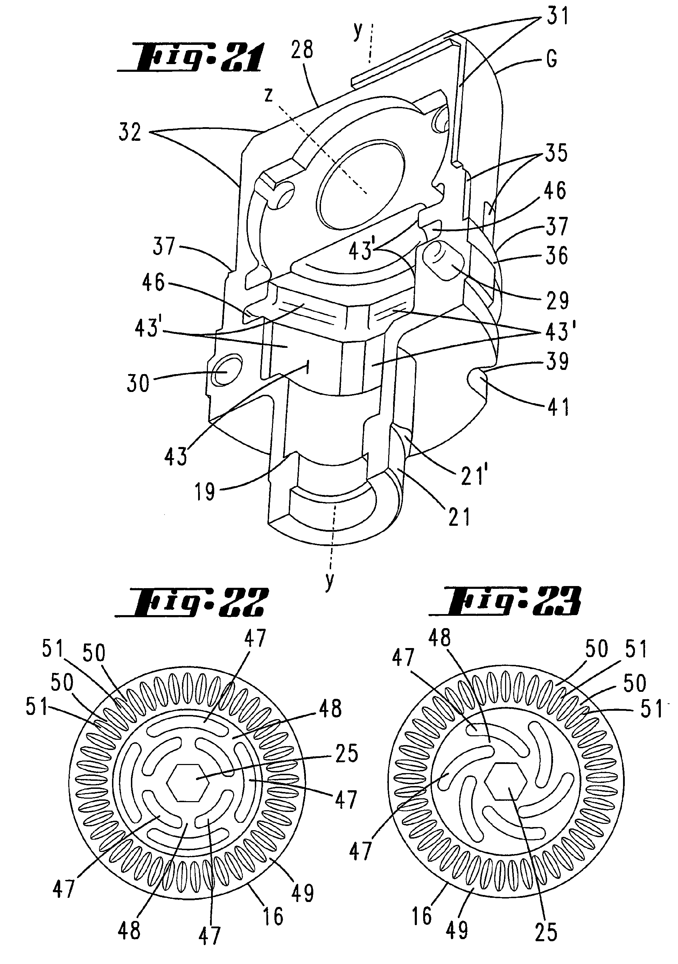

Zurückkommend zu den mit dem unteren Ende des Stößels 15 verbundenen Bremskörper 16, so besteht dieser aus einer axial federnden Scheibe. Die kann aus Kunststoff hergestellt sein oder aber auch aus Metall, bspw. Stahlblech. Die Federfähigkeit vor allem bei letztgenannter Materialauswahl ist durch Durchbrechungen der Scheibe erhöht. Konkret ist die Federbarkeit des Bremskörpers 16 durch konzentrisch zur geometrischen Achse des Stößels 15 verlaufende Reihen von Langlöchern 47 erzielt. Es sei auf Fig. 22 verwiesen. Dort sind zwischen dem Auge 25 und der Peripherie der Scheibe, deutlich randbeabstandet, zwei Reihen von Langlöchern 47 realisiert. Die Scheibe weist je vier gleich lange, winkelgleich verteilte Langlöcher 47 auf. Zwischen den Langlöchern 47 jeder Reihe verbleiben Materialbrücken 48. Die sind axial orientiert. Zur Erzielung/ Erhöhung der Federbarkeit erstrecken sich die Materialbrücken 48 der einen Reihe von Langlöchern 47 in der Mitte jeweils eines konzentrisch benachbarten Langloches 47 der diesbezüglichen Reihe.

Die Variante Fig. 23 zeigt eine ähnliche federfahige Struktur, nur dass sich dort die Materialbrücke 48 zwischen einem Ende eines Langloches 47 und der Mitte des benachbarten Langloches 47 erstreckt. Die Federbarkeit des Bremskörpers 16 ist erkennbar durch radial gleichsinnig gekrümmte, einander auf einer Teillänge überlappende Langlöcher 47 erreicht. Vom Grundriss her ergibt sich praktisch eine schaufelradartige Durchbrechungsstruktur, wobei die Langlöcher 47 gleichsam geschindelt verlaufen.

Der Bremskörper 16 sowohl der Grundversion als auch der Varianten ist mit einer umlaufenden Randrinne 49 ausgestattet. Die kragt gegenüber dem im Wesentlichen ebenflächigen Mittelfeld der Scheibe in Richtung des Laufrades 9 vor. Der Rand ist so auch in sich stabilisiert.

Zur Erzielung einer besonders gut wirksamen Bremsung sowie Richtungsfeststellung der Lenkrolle 1 respektive des Laufrades 9 ist der auf die Lauffläche 17 aufsetzende Rand der Scheibe, die Unterseite des Rinnengrundes also, außenseitig kluftreich gestaltet. Die diesbezügliche Rauungsstruktur besteht aus Radialrippen 50, die mit Radialnuten abwechseln. Das kann durch Formen oder Prägen erreicht werden. Selbst eine spanabhebende Nutung zur Erlangung der Radialnuten ist denkbar.

Fig. 20 stellt eine Variante vor, bei der die Radialrippen 50 und die Radialnuten 51 durch eine Umfangswellung der Randrinne 49 gebildet sind. In die Wellung ist der gesamte Rinnenabschnitt einbezogen. Die Wellung als Ganzes ist mit W bezeichnet.

Aufgrund der vorliegenden Gleichmäßigkeit der geschilderten Rauungsstruktur lässt sich radgabelseitig eine Gegenstruktur errichten. Es handelt sich um einen zwischen den Gabelschenkeln angeordneten, den Gabelraum in Nähe des Bremskörpers 16 querenden Balken 52. Der weist oberseitig, im Wirkungsbereich des Bremskörpers 16 liegend, die entsprechende radial orientierte Rippen- und Nutenstruktur auf. Sie stellt so mit ihrer Oberseite die Radgabel-Dreh- bzw. Lenksperre 53. Eine solche Ausstattung ist auch bezüglich der Variante Fig. 19 vorgenommen, berücksichtigend die dortige Zahnung des Bremskörpers 16. Bezüglich der ortsfesten Dreh- bzw. Lenksperre ist es für das eintauchende Verzahnen günstig, dass die Scheibe die erläuterte Federfähigkeit aufweist. Die Scheibe rückt bei nicht eingriffsgerechter Zahnstellung durch eine leichte Drehbewegung der Radgabel 5 ein.

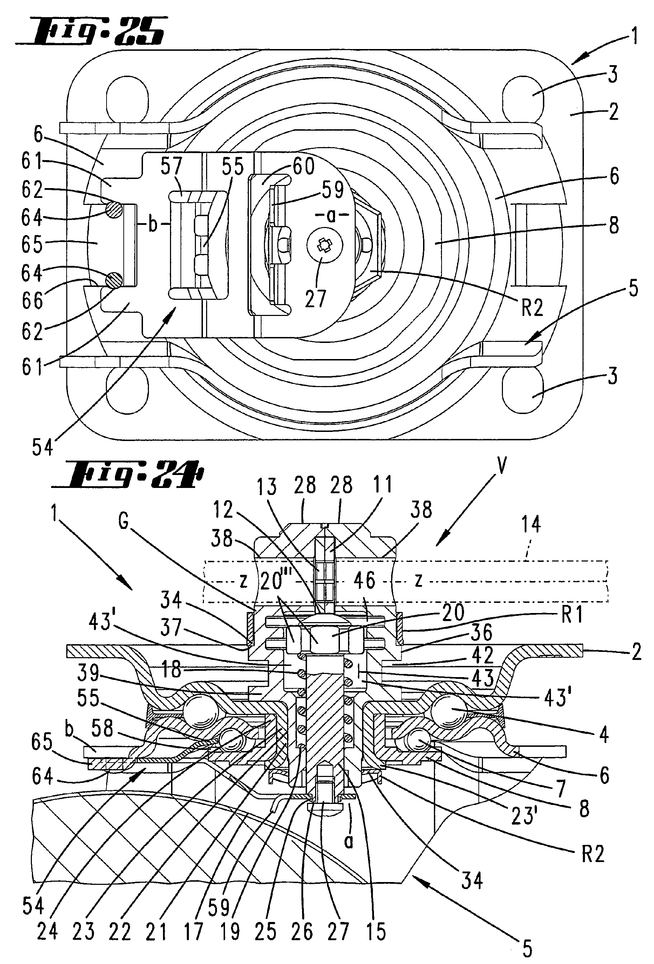

Den Gedanken der Bremsung sowie Richtungsfeststellung aufgreifend, geht aus den Figuren 24 ff eine Lösung hervor, die den den Gabelraum querenden Balken 52 verzichtbar macht. Der grundsätzliche Aufbau der Laufrolle 1 ist jedoch beibehalten. Die Bezugsziffern sind, soweit zum Verständnis erforderlich, sinngemäß angewandt, dies zum Teil ohne textliche Wiederholungen.

Zunächst zur Richtungsfeststellung der Lenkrolle 1: Die Feststellvorrichtung V ist diesbezüglich so ausgestaltet, dass ihr laufradseitig austretender Stößel 15 als Betätigungselement fungiert. Genutzt ist hierbei feststelltechnisch der ortsfeste Ringbund 8, welcher über den Kragen 23 mit dem Stutzen 22 der Montageplatte 2 in undrehbarer Verbindung steht. Der Ringbund 8 bildet so das lagerabstützende Aufnahmeteil der Lenkrolle 1. Der Gabelgrund 6 ist zwischen dem Ringbund 8 und der lagerinnenbildenden Montageplatte 2 unter Zwischenschaltung der Kugellager 4 und 7 exakt drehgeführt. Zur Schaffung der Richtungsfeststellvorrichtung dient ein zwischen das ortsfeste und drehbare Element der Lenkrolle 1 einschaltbares Dehrichtungs-Feststellteil 54. Das Drehrichtungs-Feststellteil 54 ist eine Feder, konkret eine Blattfeder.

Das Drehrichtungs-Feststellteil 54 greift, zentral gelegen, mit etwas Spiel am nach unten gerichteten freien Ende des Stößels 15 an. Bezüglich der Feder ist das ein Innen-Befestigungsabschnitt a. Es handelt sich um ein Auge 25, welches vom Steckvorsprung 26 durchsetzt ist, wobei unterseitig der Kopf der Schraube 27 die entsprechende Steckverbindung sichert.

Außer im Zentrum ist das Drehsicherungs-Feststellteil 54 randseitig fixiert, und zwar, wie schon angedeutet, am Gabelgrund 6. Bezogen auf den Stößel 15 liegt so praktisch ein radial ausgerichteter Außen-Befestigungsabschnitt b vor.

Den drehsperrenden Part des Drehrichtungs-Feststellers 54 bildet ein Blockierabschnitt 55. Letzterer ist von rechenartiger Struktur und weist Zähne 56 auf. Es sind drei. Der Blockierabschnitt 55 ist aus dem lappenartigen Blattfeder-Zuschnitt freigeschnitten und ausgebogen. Der Freischnitt ist an drei zusammenhängenden Seiten vorgenommen, so dass der Blockierabschnitt 55 bezüglich einer Seite in einem Fenster 57 wurzelt.

Die Zähne 56 des Drehrichtungs-Feststellteils 54 sind einer oberseitig des Ringbundes 8 ausgeformten Verzahnung 58 zugeordnet. Dargestellt sind Zahnlücken, gleich neben dem unteren Kugellager 7 gelegen. In die Zahnlücken eingetreten, liegt die erstrebte Drehsicherung vor. In Grundstellung - sie ist federbelastet- befinden sich die Zähne 56 außer Eingriff, Sie können sich an einer darüber liegenden Ringmulde des oberen Kugellagers 4 definiert abstüt zen.

Zur Herbeiführung der Drehsicherung bedarf es der vertikal orientierten Absenkung des Stößels 15.

Was nun die Drehbremsung des Laufrades 9 betrifft, so ist auch diesbezüglich das Drehrichtungs-Feststellteil 54, also die Feder, herangezogen. Die Feder weist in radialer Richtung, bezogen auf den Stößel 15, zwischen dem Stößel 15 und dem Blockierabschnitt 55 einen Brems-Eingrinsabschnitt 59 auf.

Der in Brems-Zusammenwirkung mit dem Laufrad 9 tretende Brems-Eingriffsabschnitt 59 ist ebenfalls aus dem Blattfederstanzling freigeschnitten und ausgebogen. Das einen dreiseitigen Freischnitt bietende Fenster ist hier mit 60 bezeichnet. Eine Seite des Brems-Eingriffsabschnitts 59 wurzelt demgemäß auch hier im federnden Grundkörper.

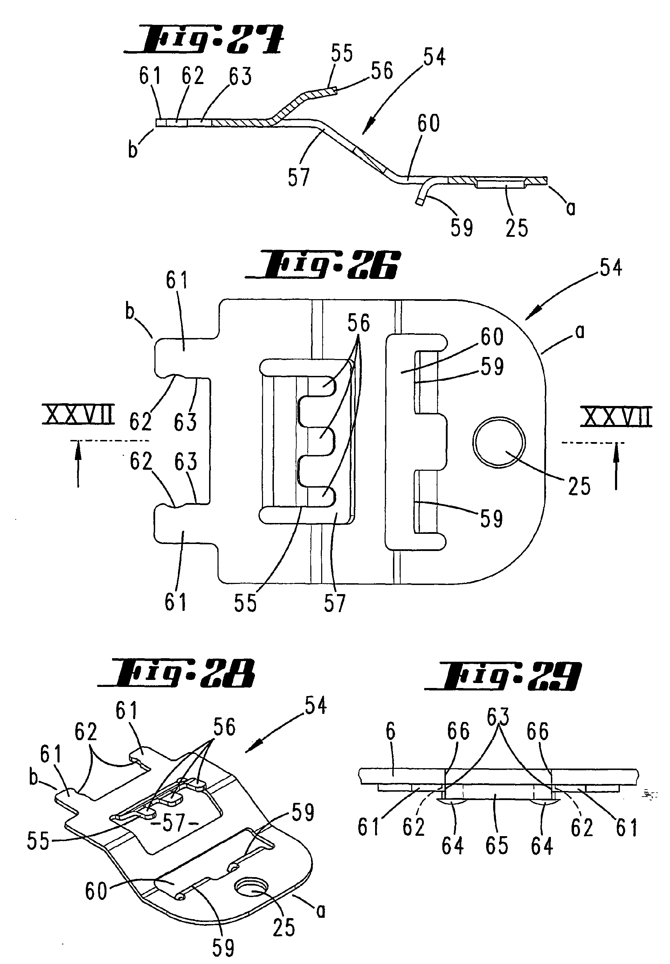

Der Brems-Eingriffsabschnitt 59 ist, wie Figur 26 und Figur 28 entnehmbar, geteilt, so dass zwei unabhängige Bremsvorprünge vorliegen.

Unter Berücksichtigung der Tatsache, dass die die Drehblockierung bringenden Mittel höher liegen als die Bremsmittel, weist die Feder in korrekter Erlangung dieser Stellen, im Längs-Querschnitt gesehen, einen Z-förmigen Verlauf auf. Der Blockierabschnitt 55 und der Brems-Eingriffsabschnitt 59 sind zwei verschiedenen vertikal beabstandeten Ebenen zugeordnet. Die obere liegt etwa im unteren Drittel des zylindrischen Abschnitts des Stößels 15 in Grundstellung und die andere Ebene gleich unterhalb des freien Endes des Stößels 15.

Erkennbar ist der Blockierabschnitt 55 dem Laufrad 9 abgewandt und der Brems-Eingriffsabschnitt 59 demselben zugewandt ausgebogen.

Der Außen-Befestigungsabschnitt b des Drehrichtungs-Feststellteils 54 ist gegabelt. Gabelbildend sind zwei parallel verlaufende Befestigungszungen 61. Die verlaufen horizontal und so in Ebengleichheit mit dem anschließenden Umfeld des Drehrichtungs-Feststellteils 54. Die sind ergänzend zur erwähnten Formschlusshalterung, beispielsweise im Sinne einer Steckzuordnung, noch mit einer Formschlussausformung 62 versehen. Es handelt sich um kreisabschnittsförmige Nischen oder Buchten. Solche Formschlussausformungen 62 sind an den einander zugewandten schmalen Randkanten 63 der parallel verlaufenden Befestigungszungen 61 ausgeformt.

Die Formschlussausformung 62 wirkt mit einem Durchsetzniet 64 zusammen, der am Gabelgrund 6 befestigt ist. Es sei auf Figur 25 verwiesen. Ein dem genannten Niet entsprechender Körper kann auch gleich integraler Teil der Radgabel 5 bzw. des Gabelgrundes 6 sein. Er ist daraus praktisch schaftbildend ausgedrückt.

Ein Randabschnitt des Gabelgrundes 6 ist im Bereich der Formschlusshalterung etwa um Materialdicke treppenstufenartig abgesenkt. Dieser Abschnitt entspricht dem direkten lichten Abstand zwischen den geraden Randkanten 63 der Befestigungszungen 61. Sie umgreifen die abgesenkte Stufe 65 satt anliegend (vgl. Figur 29). Die von unten her in die Stufe 65 eingesetzten Durchsetzniete 64 füllen mit ihrem Schaft die Formschlussausformung 62 aus, dies so, dass durch deren sperrriegelartige Wirkung ein Abziehen des Drehrichtungs-Feststellteils 54 ausgeschlossen ist.

Der kreisrunde Querschnitt des Durchsetzniets 64 schneidet die vertikale Freischnittebene 66 der Stufe 65.

Durch abwärtsgerichtete Stößelbewegung wird der Brems-Eingriffsabschrutt 59 bremsend in die Lauffläche 17 gedrückt und der Blockierabschnitt 55 in die Verzahnung 58 drehsperrend eingeklinkt.

## Patentansprüche

1. Lenkrolle (1) mit einem Laufrad (9), bspw. für einen Müllcontainer, weiter mit einer Feststellvorrichtung (V) und einer Radgabel (5), in der das Laufrad (9) aufgenommen ist, wobei die über einen Schaltnocken (11) betätigbare Feststellvorrichtung (V) in einem Führungsgehäuse (G) gelagert ist, das seinerseits an einer mit der Radgabel (5) verbundenen Montageplatte (2) gehaltert ist, wobei darüber hinaus das Führungsgehäuse (G) aus zwei entlang einer Vertikalen zusammenwirkenden Gehäusehälften (28) besteht und die Gehäusehälften (28) durch ein als Ringkörper (R1, R2) ausgebildetes Umfassungselement zusammengehalten sind, **dadurch gekennzeichnet, dass** die Gehäusehälften (28) durch fugenübergreifende Vorsprünge (29, 31) verschiebefest sind und dass die Gehäusehälften (28) formidentisch ausgebildet sind.

2. Lenkrolle (1) nach Anspruch 1, **dadurch gekennzeichnet, dass** die Feststellvorrichtung (V) einen laufradseitig austretenden Stößel (15) aufweist und die Radgabel (5) an einem ortsfest mit der Feststellvorrichtung (V) verbundenen, einen Ringbund (8) aufweisenden Aufnahmeteil lagerabgestützt ist, wobei weiter ein Drehrichtungs-Feststellteil (54), das mit dem freien Ende des Stößels (15), bildend einen Innen-Befestigungsabschnitt (a), verbunden ist und bei Absenkung des Stößels (15) mit Zähnen (56) in eine Verzahnung (58) zur Drehsicherung eingreift, wobei darüber hinaus die Verzahnung oberseitig des Ringbundes (8) ausgeformt ist, dass das Drehrichtungs-Feststellteil (54) eine Feder ist und dass die die Feder in radialer Richtung, bezogen auf den Stößel (15), zwischen dem Stößel (15) und dem Blockierabschnitt (55) einen Brems-Eingriffsabschnitt (59) aufweist zur Brems-Zusammenwirkung mit dem Laufrad (9).

3. Lenkrolle nach Anspruch 1 oder 2, **dadurch gekennzeichnet, dass** der Ringkörper (R1 bzw. R2), jedenfalls in aufgestecktem Zustand, eine sich in Umfangsrichtung erstreckende, axial ausgeprägte Aufweitung (34) aufweist.

4. Lenkrolle nach einem der Ansprüche1 bis 3, **dadurch gekennzeichnet, dass** der Ringkörper (R2), jedenfalls bei Anordnung unterhalb der Montageplatte (2) als Klemmfeder ausgebildet ist.

5. Lenkrolle nach einem der Ansprüche 1 bis 4, **dadurch gekennzeichnet, dass** an einer Gehäusehälfte (28) ein Flanschabschnitt (39) ausgeformt ist, der oberseitig der Montageplatte (2) mit Vertikalvorsprüngen (40) der Montageplatte (2) formschlüssig zur Drehsicherung zusammenwirkt.

6. Lenkrolle nach einem der Ansprüche 1 bis 5, **dadurch gekennzeichnet, dass** eine Gehäusehälfte (28) umfangsseitig Sicherungsausformungen zur Zusammenwirkung mit dem Ringkörper (R1) aufweist, wobei, bevorzugt, die Sicherungsausformungen ein Kranz axial orientierter Rippen (35) sind.

7. Lenkrolle nach einem der vorhergehenden Ansprüche, **dadurch gekennzeichnet, dass** die Feststellvorrichtung (V) einen durch den Schaltnocken (11) betätigbaren Stößel (15) aufweist, wobei, bevorzugt, der Stößel (15) in dem Führungsgehäuse (G) drehgesichert aufgenommen ist.

8. Lenkrolle nach einem der vorhergehenden Ansprüche, **dadurch gekennzeichnet, dass** die Feststellvorrichtung (V) einen scheibenförmigen Bremskörper (16) aufweist, der drehgesichert am Stößel (15) angeordnet ist, wobei, bevorzugt, der Bremskörper (16) als axial federbare Scheibe ausgebildet ist.

9. Lenkrolle nach Anspruch 8, **dadurch gekennzeichnet, dass** die Federbarkeit des Bremskörpers (16) durch konzentrisch zur Achse des Stößels (15) ausgebildete Reihen von Langlöchern (47) erzielt ist, belassend jeweils radiale Materialbrücken (48) etwa in der Mitte eines konzentrisch benachbarten Langloches (47) und/oder dass die Federbarkeit des Bremskörpers (16) durch radial gleichsinnig gekrümmte, einander auf einer Teillänge überlappende Langlöcher (47) erreicht ist.

10. Lenkrolle nach einem der Ansprüche 2 bis 9, **dadurch gekennzeichnet, dass** ein mit der Verzahnung (58) zusammenwirkender Blockierabschnitt (55) aus der Feder ausgebogen ist und, bevorzugt, die Feder über den Blockierabschnitt (55) hinaus sich, bezogen auf den Stößel (15), radial in einen Außen-Befestigungsabschnitt (b) einer Formschlusshalterung fortsetzt.

11. Lenkrolle nach einem der Ansprüche 2 bis 10, **dadurch gekennzeichnet, dass** der Brems-Eingriffsabschnitt (59) aus der Feder ausgebogen ist.

12. Lenkrolle nach einem der Ansprüche 2 bis 11, **dadurch gekennzeichnet, dass** der Blockierabschnitt (55) und der Brems-Eingriffsabschnitt (59) zwei verschiedenen, vertikal beabstandeten Ebenen zugeordnet sind.

13. Lenkrolle nach einem der Ansprüche 2 bis 12, **dadurch gekennzeichnet, dass** die Feder im Längs-Querschnitt einen Z-förmigen Verlauf hat.

14. Lenkrolle nach einem der Ansprüche 2 bis 13, **dadurch gekennzeichnet, dass** der Blockierabschnitt (55) dem Laufrad (9) abgewandt und der Brerns-Eingriffsabschnitt (59) demselben zugewandt ausgebogen ist.

15. Lenkrolle nach einem der Ansprüche 2 bis 14, **dadurch gekennzeichnet, dass** der Blockierabschnitt (55) und der Brems-Eingriffsabschnitt (59) freigeschnitten in Fenstern (57, 60) der Feder wurzeln.

## Claims

1. Steering roller (1) comprising a running wheel (9), for example for a refuse container, further comprising a locking device (V) and a wheel fork (5), in which the running wheel (9) is received, the locking device (V) which is actuatable by a switch cam (11) being mounted in a guide housing (G) which is in turn mounted on a mounting plate (2) connected to the wheel fork (5), the guide housing (G) further consisting of two housing halves (28) which cooperate along a vertical line and the two housing halves (29) being held together by an encompassing member configured as an annular member (R1, R2), **characterised in that** the housing halves (28) are fixed in place by interlocking projections (29, 31), and **in that** the housing halves (28) are identical in size and shape.

2. Steering roller (1) according to claim 1, **characterised in that** the locking device (V) comprises a tappet (15) emerging on the running wheel side and the wheel fork (5) is supportingly mounted on a rigid receiving part which comprises an annular collar (8) and is connected to the locking device (V), a rotational direction locking part (54) further being connected to the free end of the tappet (15) so as to form an inner fixing portion (a) and engaging with teeth (56) in a toothing (58) when the tappet (15) is lowered so as to prevent rotation, the toothing further being moulded on top of the annular collar (8), **in that** the rotational direction locking part (54) is a spring, and **in that** the spring comprises a brake engagement portion (59) in the radial direction, based on the tappet (15), between the tappet (15) and the locking portion (55) for braking cooperation with the running wheel (9).

3. Steering roller according to either claim 1 or claim 2, **characterised in that** the annular member (R1 and R2), in the attached state in any case, comprises a widening which extends in the peripheral direction and is axially pronounced.

4. Steering roller according to any one of claims 1 to 3, **characterised in that** the annular member (R2), when arranged below the mounting plate (2) in any case, is configured as a clamping spring.

5. Steering roller according to any one of claims 1 to 4, **characterised in that** a flange portion (39) is moulded on one housing half (28), said flange portion cooperating above the mounting plate (2) with vertical projections (40) of the mounting plate (2) so as to prevent rotation.

6. Steering roller according to any one of claims 1 to 5, **characterised in that** one housing half (28) comprises peripheral safety mouldings for cooperation with the annular member (R1), the safety mouldings preferably being a ring of axially oriented ridges (35).

7. Steering roller according to any one of the preceding claims, **characterised in that** the locking device (V) comprises a tappet (15) which is actuatable by the switch cam (11), the tappet (15) preferably being received in the guide housing (G) in a non-rotating manner.

8. Steering roller according to any one of the preceding claims, **characterised in that** the locking device (V) comprises a disc-shaped braking member (16) which is arranged on the tappet (15) in a non-rotating manner, the braking member (16) preferably being configured as an axially springable disc.

9. Steering roller according to claim 8, **characterised in that** the springability of the braking member (16) is achieved by rows of slots (47) formed concentrically relative to the axis of the tappet (15), each leaving radial material bridges (48) approximately in the centre of a concentrically adjacent slot (47), and/or **in that** the springability of the braking member (16) is achieved by slots (47) which are radially curved in the same direction and overlap one another over part of their length.

10. Steering roller according to any one of claims 2 to 9, **characterised in that** a locking portion (55) which cooperates with a toothing (58) is bent out of the spring and the spring preferably extends radially over the locking portion (55), based on the tappet (15), into an outer fixing portion (b) of a holder having a positive fit.

11. Steering roller according to any one of claims 2 to 10, **characterised in that** the brake engagement portion (59) is bent out of the spring.

12. Steering roller according to any one of claims 2 to 11, **characterised in that** the locking portion (55) and the brake engagement portion (59) are associated with two different levels, spaced apart vertically.

13. Steering roller according to any one of claims 2 to 12, **characterised in that** the spring is Z-shaped in longitudinal section.

14. Steering roller according to any one of claims 2 to 13, **characterised in that** the locking portion (55) is bent so as to face away from the running wheel (9) and the brake engagement portion (59) is bent so as to face said running wheel.

15. Steering roller according to any one of claims 2 to 14, **characterised in that** the locking portion (55) and the brake engagement portion (59) are rooted in apertures (57, 60) in the spring in a clean-cut manner.

## Revendications

1. Roulette pivotante (1) avec roulette (8), par exemple pour un conteneur à déchets, avec encore un dispositif d'arrêt (V) et une fourche de roulette (5) dans laquelle la roulette (9) est insérée, le dispositif de blocage (v) actionnable par une came de contact (11) étant logé dans un cylindre de guidage (G) maintenu d'une part sur une plaque de montage (2) raccordée à la fourche de roulette (5), le cylindre de guidage (G) étant en outre constitué de deux moitiés de cylindre (28) coopérant le long d'une verticale, et les moitiés de cylindre (28) étant maintenues ensemble par un élément de pourtour façonné en corps circulaire (R1,R2),
**caractérisée en ce que**
les moitiés de cylindre (28) sont calées par des protubérances (29, 31) chevauchantes à emboîtement et **en ce que** les moitiés de cylindre (28) sont de forme identique.

2. Roulette pivotante (1) selon la revendication 1, **caractérisée en ce que** le dispositif de blocage (V) possède un coulisseau (15) sortant côté roulette et la fourche de roulette (5) est située s'appuyant sur une pièce de support présentant un lien annulaire (8) et reliée de manière fixe au dispositif de blocage (V), une pièce de direction de marche-de blocage (54) étant de plus reliée avec l'extrémité libre du coulisseau (15) formant une section intérieure de fixation (a), et en cas d'abaissement du coulisseau (15) s'engrène avec des dents (56) dans un engrenage (58) pour caler la direction, l'engrenage étant façonné au-dessus du lien annulaire (8) de façon que la pièce de direction de marche-de blocage (54) est un ressort et que le ressort présente dans le sens radial, par rapport au coulisseau (15), entre le coulisseau (15) et la section de blocage (55), une section de freinage-mise en prise (59) avec effet coopérant de freinage avec la roulette (9).

3. Roulette pivotante selon la revendication 1 ou 2, **caractérisée en ce que** le corps annulaire (R1 ou, selon le cas, R2) présente, quand il est placé, un évasement (34) axial qui s'étend dans la direction périphérique.

4. Roulette pivotante selon l'une des revendications 1 à 3, **caractérisée en ce que** le corps annulaire (R2), quand il est agencé en dessous de la plaque de montage (2), est réalisé en ressort à serrer.

5. Roulette pivotante selon l'une des revendications 1 à 4, **caractérisée en ce que** sur une moitié de cylindre (28) une section en flasque (39) est formée, laquelle coopère par complémentarité de forme, au-dessus de la plaque de montage (2), avec des protubérances verticales (40) de la plaque de montage (2), à l'immobilisation antirotation.

6. Roulette pivotante selon l'une des revendications 1 à 5, **caractérisée en ce qu'**une moitié de cylindre (28), côté périphérie, présente des formes d'arrêt pour une coopération avec le corps annulaire (R1) où, de préférence, les formes d'arrêt sont une couronne de nervures (35) orientées dans l'axe.

7. Roulette pivotante selon l'une des revendications précédentes, **caractérisée en ce que** le dispositif d'arrêt (V) présente un coulisseau (15) actionnable par la came de contact (11) où, de préférence, le coulisseau (15) est pris, immobilisé antirotation, dans le cylindre de guidage (G).

8. Roulette pivotante selon l'une des revendications précédentes, **caractérisée en ce que** le dispositif de blocage (V) possède un corps de freinage (16) en disque agencé angulairement immobilisé antirotation sur le coulisseau (15), où, de préférence, le corps de freinage (16) est réalisé en disque pouvant se comporter axialement comme un ressort.

9. Roulette pivotante selon la revendication 8, **caractérisée en ce que** cette aptitude de comportement de ressort chez le corps de freinage (16) est réalisée par des séries de trous longitudinaux (47) formés de manière concentrique par rapport à l'axe du coulisseau (15), en laissant chaque fois des ponts de matériau (48) radiaux à peu près au centre d'un trou longitudinal (47) concentriquement voisin et/ou **en ce que** cette aptitude de comportement de ressort chez le corps de freinage (16) est rendu possible par des trous longitudinaux (47) radialement courbés dans le même sens se chevauchant l'un l'autre sur une partie de longueur.

10. Roulette pivotante selon l'une des revendications 2 à 9, **caractérisée en ce qu'**une section de blocage (55) coopérant avec l'engrènement (58) est pliée depuis le ressort et, de préférence le ressort dépasse de la section de blocage (55), par rapport au coulisseau (15), radialement dans une section extérieure de fixation (b) d'une fixation par complémentarité de forme.

11. Roulette pivotante selon l'une des revendications 2 à 10, **caractérisée en ce que** la section de freinage-de prise (59) est courbée depuis le ressort.

12. Roulette pivotante selon l'une des revendications 2 à 11, **caractérisée en ce que** la section de blocage (55) et la section de freinage-de prise (59) est assujettie à deux niveaux différents distants dans le sens vertical.

13. Roulette pivotante selon l'une des revendications 2 à 12, **caractérisée en ce que** le ressort en coupe longitudinale est en Z.

14. Roulette pivotante selon l'une des revendications 2 à 13, **caractérisée en ce que** la section de blocage (55) est à l'opposé de la roulette (9) et la section de freinage-de prise (59) est tournée courbée vers celle-ci.

15. Roulette pivotante selon l'une des revendications 2 à 14, **caractérisée en ce que** la section de blocage (55) et la section de freinage-de prise (59) prennent racine librement découpées dans des fenêtres (57, 60) du ressort.
